# EUROPÄISCHE PATENTSCHRIFT

(11) **EP 3 334 516 B1**
(45) Veröffentlichungstag und Bekanntmachung des Hinweises auf die Patenterteilung: **21.10.2020**
(21) Anmeldenummer: 16762961.7
(22) Anmeldetag: 29.07.2016
(51) Int. Cl.: B01D 46/00, B01D 46/02, B01D 46/06

(54) **BEFESTIGUNGSSYSTEM SOWIE VERFAHREN ZUR MONTAGE BZW. DEMONTAGE DES BEFESTIGUNGSSYSTEMS**
SECURING SYSTEM AND METHOD FOR ASSEMBLING OR DISASSEMBLING THE SECURING SYSTEM
SYSTÈME DE FIXATION ET PROCÉDÉ DE MONTAGE OU DE DÉMONTAGE DU SYSTÈME DE FIXATION

(30) Priorität: 10.08.2015 DE 102015113127
(43) Veröffentlichungstag der Anmeldung: 20.06.2018
(73) Patentinhaber: NETZSCH Trockenmahltechnik GmbH, 95100 Selb (DE)
(72) Erfinder: WINTER, Frank, 63165 Mühlheim (DE); TERLECKI, Karlheinz, 78224 Singen (DE)
(86) Internationale Anmeldenummer: PCT/DE2016/000296
(87) Internationale Veröffentlichungsnummer: WO 2017/025075

(56) Entgegenhaltungen:
- WO-A1-2005/044423
- DE-A1- 2 551 866
- DE-A1- 3 709 365
- DE-A1-102007 034 533
- US-A- 4 266 954
- US-A- 5 061 303
- US-A- 5 308 369

## Beschreibung

Die vorliegende Erfindung betrifft ein Befestigungssystem sowie Verfahren zur Montage bzw. Demontage des Befestigungssystems gemäß den Merkmalen der Oberbegriffe der Ansprüche 1, 8 und 9.

### Stand der Technik

Es sind bereits Befestigungssysteme für Filterschläuche und Filterkörbe an Filteranlagen bekannt. Ein bekanntes System zur Montage von Filterschläuchen an Schlauchfilteranlagen erlaubt ein Montieren und Demontieren der Filterschläuche nach oben über die Reingaskammer der Filteranlage (Top Removal-System). Vorteilhaft an diesem Befestigungssystem ist eine Befestigung der Filterschläuche über ein sogenanntes Snap-Ring-System. Dabei werden die Filterschläuche mittels eines Schnapprings so an der Filteranlage fixiert, dass sehr gute Abdichtungswirkungen erzielt und niedrige Reststaubgehalte in der Umgebungsluft gemessen werden können. Da das Top Removal-System eine einfache Montage sowie Demontage ohne spezielles Montagewerkzeug erlaubt, können Montagefehler ausgeschlossen werden. Obgleich mit Hilfe eines Top Removal-Systems gute Filterresultate erzielt werden können, ist an dieser Art der Befestigung von Filterschläuchen allerdings nachteilig, dass bei einen Wechsel der Filterschläuche und/oder Filterkörbe ein Bewegungsspielraum von einer Mindestgröße der Filterschläuche und/oder Filterkörbe zur Verfügung gestellt werden muss, da eine Entfernung der Filterschläuche und/oder Filterkörbe oberhalb der Filteranlage durchgeführt werden muss. Dabei kann zusätzliche Raumhöhe notwendig sein, welche oftmals aufgrund der Gebäudeverhältnisse nicht bereitgestellt werden kann.

Bei einer zu geringen Raumhöhe muss daher oftmals auf ein System zurückgegriffen werden, welches einen Ein- und Ausbau der Filterschläuche und/oder Filterkörbe über die Rohgaskammer der Filteranlage erlaubt (Side Removal-System), da die Filterschläuche und/oder Filterkörbe von der Seite der Filteranlage aus an der Unterseite einer Lochplatte montiert werden können. Zur Montage beziehungsweise Demontage der Filterschläuche und/oder Filterkörbe ist allerdings ein erheblicher Montagezeitaufwand notwendig. Zusätzlich wird ein Montagewerkzeug benötigt. Erfahrungsgemäß sind bekannte Side Removal-Systeme oftmals stark montagefehleranfällig.

So ist eine Side Removal-Vorrichtung zur Befestigung von Filterschläuchen und/oder Filterkörben bekannt, welche eine Fixierung der Filterschläuche mit Hilfe eines Sickensystems erlaubt. Hierbei muss der Filterschlauch zuerst über einen Filterkorb gezogen werden. Am oberen Ende wird der Filterschlauch nach innen in den Korb eingeschlagen. An einer Filterlochplatte ist eine Sicke angeordnet. Konstruktionsbedingt federt der Filterkorb bei der Montage auf die Sicke auf und klemmt sich dadurch an der Filterlochplatte fest. Mit Hilfe beispielsweise einer Schelle muss das System an der Sicke gesichert werden. Auf der schlauchabgewandten Seite der Filterlochplatte ist ein Venturi-Rohr angebracht. Bei der Montage des Filterschlauchs beziehungsweise des Filterkorbs ist dabei mit größtmöglicher Sorgfalt vorzugehen, um eine Staubdichtigkeit zur Reingaskammer zu gewährleisten.

Weiterhin werden Side Removal-Verschraubungssysteme verwendet. Bei dieser Vorgehensweise werden die Filterschläuche ebenfalls über die Filterkörbe gezogen und umgeschlagen. Der Filterkorb ist dabei in ein Pressteil mit einer außen angebrachten Sicke montiert und mit einer Schelle gesichert. Diese Montage kann außerhalb des Filters erfolgen. Im Inneren des Pressteils befindet sich ein Gewinde. Unterhalb einer Filterlochplatte ist ein passendes Gegengewinde angebracht, woran der Filterkorb beziehungsweise der Filterschlauch fixiert werden kann. Um eine Dichtigkeit der Reingaskammer zu gewährleisten, ist zwischen dem Gewindeabschnitt und der Filterlochplatte ein O-Ring eingelegt. Nachteilig an diesem System ist allerdings, dass sich zwei unterschiedliche Dichtflächen zur Reingaskammer, also zwischen dem Filterschlauch und der an dem Pressteil lokalisierten Sicke beziehungsweise bei dem zwischen dem Pressteil und der Filterlochplatte angeordnetem O-Ring, ergeben. Hierbei stellt jede Dichtfläche ein potentielles Risiko für Staubdurchschläge dar. Zusätzlich kann die Gewindeverbindung leicht gelöst werden, wodurch Staubdurchschläge auftreten. Aufgrund der hohen Belastung der Gewindeverbindung können Risse und Undichtigkeiten auftreten. Des Weiteren muss der Montagevorgang mit einer großen Sorgfalt durchgeführt werden, um ein staubdichtes Verbindungssystem zu gewährleisten.

Aus der DE 203 05 310 U1 ist eine Vorrichtung bekannt, welche einen aus Längsdrähten bestehenden Drahtkorb umfasst. Die Längsdrähte werden anhand von Drahtringen beziehungsweise Drahtteilringen so zusammen gehalten werden, dass der Drahtkorb ein zusammendrückbares Oberteil erhält. Der Filterschlauch verfügt über einen Anbindungsbereich an einer Filterlochplatte, welcher aus zwei voneinander beabstandeten Wulstringen sowie einem Stahlring besteht. Der Filterschlauch wird so an dem Anbindungsbereich angeordnet, dass die beabstandeten Wulstringe oberhalb sowie unterhalb der Filterlochplatte anliegen. Mittels des Drahtkorbs wird der Filterschlauch an der Filterlochplatte fixiert und zusätzlich durch einen Verschlussbügel gesichert. Nachteilig an dieser Vorrichtung sind allerdings ein komplexer Aufbau des Filterkorbes aufgrund der Korbgeflechtstruktur und des Verschlussbügels sowie ein weiterhin relativ aufwändiger und unflexibler Montageaufwand über die Reingasseite der Filteranlage.

Die DE 25 51 866 A1 zeigt weiterhin eine Einbau- und Tragekonstruktion für Schlauchfilter. An einer Schlauchplatte ist mit luftdichtem Abschluss in einer Einbauöffnung eine nach oben auszubauende Filtereinheit befestigt, welche sich aus einem eingehängten Beutelfilter, einem Gerippe und einer Düse zusammensetzt. Das Gerippe besteht aus einer Gruppe von inneren Drahtringen, die durch eine Gruppe von Drahtstäben, die sich in Längsrichtung erstrecken und mit Abstand zueinander um den Umfang angeordnet sind, verbunden sind. Ein Tuchfilter ist aus einem aus Filtertuch bestehenden Schlauchteil mit offenem Ende und einem oberen Faltbereich ausgebildet, wobei der obere Faltbereich mit einer kreisrunden Bandfeder angrenzend an seine Innenseite versehen ist und einen Doppelwulst aufweist, der einen äußeren Einschnitt oder Sockel für den Rand der Schlauchplatte bildet. Jeder Wulst ist mit einer Stoffüllung versehen, wodurch eine elastisch vorgespannte, zusammendrückbare Doppelwulst-Stoffdichtung gebildet wird, die sich dem Rand der Schlauchplatte anschmiegt und eine direkte Dichtung von Stoff zu Schlauchplatte bildet. Die Luftdüse ist mit einem Befestigungsflansch versehen, der ihr oberes Ende umgibt. Weiterhin kann die Tragkonstruktion aus einem zylindrischen Stutzen bestehen, der in einem Stück mit einem oberen Flansch für die Verbindung zum Venturiflansch ausgebildet ist, und einer Gruppe von Haltefedern, die an den Stutzen angebracht sind. Jede Feder weist am oberen Ende eine nach außen gerichtete Lasche auf, die als Auflageschulter dient, die sich auf den oberen Wulst legt, und zwischen dem oberen und unteren Ende eine Biegung aufweist.

Aufgabe der Erfindung ist, ein Befestigungssystem für Filterschläuche und Filterkörbe bereitzustellen, welches eine einfache und schnelle Montage, einen nahezu gänzlichen Ausschluss von Montagefehlern, einen werkzeuglosen Wechsel des Filterschlauchs beziehungsweise des Filterkorbs und eine staubdichte Anbindung der Vorrichtung an die Filteranlage sowie eine Montage beziehungsweise Demontage seitlich durch die Rohgaskammer der Filteranlage in einem Side Removal-System ermöglicht.

Die obige Aufgabe wird durch eine Vorrichtung bzw. ein Verfahren gemäß Anspruch 1 bzw. 8 oder 9 gelöst. Weitere vorteilhafte Ausgestaltungen werden durch die Unteransprüche beschrieben.

### Beschreibung

Die Erfindung betrifft ein Befestigungssystem, umfassend einen Filterschlauch mit einem ersten Außendurchmesser zur Filterung von Staubpartikeln sowie einen Filterkorb zur innenseitigen Stabilisierung und Befestigung des Filterschlauchs. Des Weiteren weist das Befestigungssystem einen an einer Filterlochplatte angeordneten Anbindungsbereich zur Anbindung des Filterschlauchs und/oder des Filterkorbs an eine Filteranlage auf. Das Befestigungssystem ist so ausgestaltet, dass ein System zur Side Removal- Montage beziehungsweise Side Removal- Demontage bereitgestellt werden kann. Dabei umfasst der Anbindungsbereich eine Aussparung für den Filterschlauch. Idealerweise weist der Anbindungsbereich eine zumindest annähernd kreisrunde Aussparung zur Anbindung des Filterschlauchs und/oder des Filterkorbs auf. Der Filterschlauch weist zur Anbindung an den Anbindungsbereich an einem freien Ende wenigstens einen Schnappring auf. Zudem weist der Filterschlauch im Bereich des Schnapprings einen zweiten Außendurchmesser auf, der zumindest geringfügig größer ist als der erste Außendurchmesser des Filterschlauchs. Der Filterkorb ist aus einem korbähnlichen Gebilde ausgestaltet und weist an seinem oberen Ende wenigstens zwei Federelemente zur Anbindung an den Anbindungsbereich auf. Der Schnappring ist dabei elastisch deformierbar und in mindestens eine erste Form bringbar, deren Querschnittsfläche kleiner ist als eine Fläche des Innenquerschnitts der Aussparung der Filterlochplatte. So kann eine stabile Angriffsfläche für die Krafteinleitung während der Montage des Filterschlauchs bereitgestellt werden.

Vorzugsweise ist der Schnappring so an dem freien Ende des Filterschlauchs angeordnet, dass der Schnappring bei Anordnung des Filterschlauchs in der Aussparung der Filterlochplatte zumindest geringfügig auf beiden Seiten der Filterlochplatte übersteht. Bei dem Schnappring kann es sich insbesondere um einen flächigen Ring aus einem metallischen Material handeln. Auch die Ausbildung des Schnapprings aus einem Kunststoffmaterial ist dabei denkbar. Beispielsweise kann der Schnappring eine flächige Breite von rund 30mm aufweisen, eine schmälere oder breitere Ausgestaltung des Schnapprings ist jedoch auch denkbar. Die Stärke des Materials kann dabei wenige Millimeter oder sogar Zehntelmillimeter betragen, sodass lediglich eine geringe Krafteinleitung zur Verformung des Schnapprings aufgebracht werden muss, aber dennoch eine gewisse Stabilität des freien Endes des Filterschlauchs erhalten bleibt.

Weiterhin ist zudem eine Ausgestaltung des Schnapprings als ein Ring, welcher eine Unterbrechung beziehungsweise Aussparung im Material aufweist, denkbar. Auch durch die Verwendung eines derartigen Rings ist eine reversibel elastische Verformung des Schnapprings zur Montage bzw. Demontage des Filterschlauchs an die Filterlochplatte möglich. Als weitere Ausgestaltungsmöglichkeit des Schnapprings können auch ringförmige Elemente mit teilweise überstehenden Enden genutzt werden, welche überstehenden Enden mittels Krafteinleitung ineinander oder auseinander geschoben werden können, wodurch eine Vergrößerung oder Verkleinerung des Durchmessers des ringförmigen Elements bewirkt werden kann."

In einer weiteren Ausführungsform weist der Filterschlauch zur Anbindung an den Anbindungsbereich an dem einem Ende, das zur Anbindung an die Filteranlage bestimmt ist, zwei voneinander beabstandete Einlagebänder auf. Die Einlagebänder sind elastisch deformierbar und so ausgestaltet, dass sich aufgrund der Stärke der Einlagebänder jeweils ein verdickter Bereich mit dem zweiten Außendurchmesser des Filterschlauchs ausbildet. Vorzugsweise handelt es sich bei den Einlagebändern um Einlagebänder aus einem Textil- oder Kunststoffmaterial. Dennoch ist auch die Verwendung von anderen Materialien denkbar. Die Einlagebänder können ebenfalls eine flächige Breite von beispielsweise 30mm aufweisen, eine schmälere oder breitere Ausgestaltung der Einlagebänder ist zudem denkbar. Auch können die zwei Einlagebänder jeweils unterschiedliche Breiten aufweisen. Üblicherweise besitzen die Einlagebänder eine größere Stärke als der Schnappring, beispielsweise 5 bis 10mm, sodass ein deutlich verdickter Bereich des Filterschlauchs mit zweitem Außendurchmesser gegenüber Bereichen des Filterschlauchs mit erstem Außendurchmesser ausgebildet werden kann. Weiterhin sind auch geringere oder größere Stärken der Einlagebänder vorstellbar. Die Einlagebänder können jeweils gleiche oder unterschiedliche Stärken aufweisen. Erfindungsgemäß kann die Ausgestaltung des Filterschlauchs dabei idealerweise ein derartiges Maß aufweisen, so dass eine direkte Anschlussfläche des Filterschlauchs an die Aussparung des Anbindungsbereichs erzeugt werden kann.

In einem weiteren Aspekt der Erfindung ist der Filterschlauch so an den Anbindungsbereich angebunden, dass die zwei Einlagebänder jeweils an der Oberfläche und Unterseite der Filterlochplatte anliegen. Dabei können die zwei Einlagebänder derartig an dem Anbindungsbereich befestigt sein, so dass der Filterschlauch keine Vertikalbewegung ausführen kann.

Der Schnappring kann zudem so angeordnet sein, dass dieser zumindest teilweise flächenmäßig an einer Seitenkante von den Einlagebändern überdeckt wird, wodurch eine stabile Angriffsfläche zur Erleichterung der Montage und/oder Demontage des Filterschlauchs entsteht. Sobald der Filterschlauch im Bereich des Schnapprings zumindest einseitig eingedrückt wird, kann eine Einbringung des Filterschlauchs in den Anbindungsbereich vorgenommen werden.

Der Filterkorb ist beispielsweise als ein korbähnliches Gebilde mit daran befestigten Federelementen ausgebildet. Bei dem zur Herstellung des Filterkorbs verwendeten Material handelt es sich idealerweise um ein Metall, eine Verwendung von einem Kunststoffmaterial ist allerdings auch denkbar. Zur Anbindung an den Anbindungsbereich der Filterlochplatte wird der Filterschlauch teilweise über den Filterkorb gestülpt. Der Teil des Filterkorbs, welcher sich gänzlich innerhalb des Filterschlauchs befindet, ist idealerweise als eine Art Drahtgeflecht ausgestaltet. Durch das Drahtgeflecht erfährt der Filterschlauch eine formwahrende innenseitige Stabilisierung. Zur Anbindung an den Anbindungsbereich weist der Filterkorb an dem oberen Ende des Drahtgeflechts wenigstens zwei Federelemente, vorzugsweise Federklammern aus Stahlmaterial, auf. Dabei sind die Federelemente so ausgebildet, dass sie bei einer auftretenden Druckkraft eine elastische Deformation durchführen können. Die Länge und Anzahl der Federelemente ist so gewählt, dass eine einfache Montage und/oder Demontage des Filterkorbs sowie des Filterschlauchs, innerhalb dessen der Filterkorb positioniert ist, ermöglicht wird. Daher wird der Filterkorb mit zwei bis sechs, idealerweise aber drei, Federelementen ausgerüstet, sodass genug Freiraum für die Montage und/oder Demontage des Filterschlauchs besteht, wobei dennoch eine gewisse Befestigungsstabilität des Filterkorbs erhalten wird.

Erfindungsgemäß wird mittels einer in Richtung des Mittelpunkts des Federkorbes gerichteten Druckbewegung gegen die Federelemente eine Einführung der Federelemente in den Anbindungsbereich ermöglicht, um eine einfache Montage und/oder Demontage bereitzustellen. Sobald die Druckbewegung nachlässt, bewegen sich die Federelemente aufgrund ihrer Federkraft zurück in ihre Ausgangsposition und legen sich an den Anbindungsbereich an, so dass sich die Federelemente in den Anbindungsbereich einhängen können. Die Federelemente sind mit zumindest teilweise U-förmigen Klammerenden ausgestattet, welche das obere Einlegeband auf der Oberfläche der Filterlochplatte umklammern können und auf der Oberfläche des Anbindungsbereichs aufliegen. Dadurch umschließen die Federelemente teilweise das obere Einlegeband des Filterschlauchs und gewährleisten eine weitere Sicherung und Stabilisierung des Filterschlauchs an dem Anbindungsbereich. Die federnde Wirkung der Federelemente macht eine weitere Stabilisierungs- oder Fixierungsmaßnahme des Filterschlauchs beziehungsweise des Filterkorbs überflüssig.

Die Anordnung des Filterschlauchs an den Anbindungsbereich kann so erfolgen, dass sich die Filterlochplatte zwischen den zwei voneinander beabstandeten Einlagebändern befindet. Der Abstand zwischen den zwei Einlagebändern ist dabei so gewählt, dass die Einlagebänder mit den sich gegenüberliegenden Seitenflächen idealerweise direkt an dem Anbindungsbereich anliegen. Dadurch werden mögliche Vertikalbewegungen des Filterschlauchs verhindert und Staubdurchschläge aufgrund einer durchgängigen Dichtstelle vermieden. Nach Weichen der Druckkraft auf den Schnappring springt dieser dank seiner Federkraft wiederum in seine vorhergehende Form, so dass der Filterschlauch an dem Anbindungsbereich in der gewünschten Position anliegen kann, um eine staubdichte Dichtstelle zwischen dem Filterschlauch und der Filterlochplatte zu erhalten.

Gemäß einer bevorzugten Ausführungsform der Erfindung können zur weiteren Stabilisierung der Angriffsfläche des Filterschlauchs beabstandet von dem ersten Schnappring ein oder mehrere weitere Schnappringe angebracht werden. Zur einfacheren Handhabung des Filterschlauchs können die Einlagebänder auch eine unterschiedliche Breite aufweisen. Idealerweise verfügt der Filterschlauch aufgrund seiner Ausgestaltung über eine derartige Stabilität, dass neben den Federelementen keine weitere Fixierung notwendig ist.

Durch diese Art der Ausgestaltung des Filterschlauchs kann auf eine Anbindung mittels einer Sicke beziehungsweise einer Schelle verzichtet werden. Zudem ist auch keine zusätzliche Abdichtung zwischen der Anbindung des Filterschlauchs an dem Anbindungsbereich mehr notwendig. Die Montage der Vorrichtung wird aufgrund der einfachen Ausgestaltung erleichtert und die für die Montage benötigte Zeit wird verkürzt.

Üblicherweise werden Filteranlagen im Bereich des Filterschlauchs beziehungsweise des Filterkorbes mit einem Venturi-Element, insbesondere einer Venturi-Düse, ausgestattet. Um ein Ausheben des Filterschlauchs in vertikaler Richtung und eine Führung beziehungsweise Zentrierung des Filterkorbes in radialer Richtung zu ermöglichen, ist das Venturi-Element über einen angearbeiteten Bund eines Plattenanschnitts an dem Anbindungsbereich lösbar, beispielsweise mittels einer Schraubenverbindung befestigt. Erfindungsgemäß ist auch eine unlösbare Anbindung des Venturi-Elements denkbar, beispielsweise durch eine Schweißanbindung oder eine einteilige Ausgestaltung des Venturi-Elements und der Filterlochplatte als ein Press- oder Gussteil.

Als weitere Ausführungsform können im Umkreis des Anbindungsbereichs vertiefte Einrastabschnitte angeordnet sein. Die Einrastabschnitte sind so positioniert, dass die Klammerenden der Federelemente des Filterkorbs darin eingreifen können. Dadurch kann eine weitere Befestigungssicherung des Filterkorbs bereitgestellt werden.

Die Montage des Befestigungssystems umfasst wenige einfache, manuell durchführbare Montageschritte. Für den Montagevorgang wird dabei kein Montagewerkzeug benötigt. Im ersten Schritt wird der Filterschlauch bis zu 90% auf den Korb gezogen. Die Federelemente des Filterkorbs werden anschließend nach innen mit Druck beaufschlagt und durch die Aussparung des Anbindungsbereichs geführt. Sobald die Druckkraft nachlässt, gelangen die Federelemente zurück in ihre Ausgangsposition, und der Filterkorb kann in den Anbindungsbereich eingehängt werden. Darauf folgend wird der Filterschlauch im Bereich des Schnapprings einseitig nach innen mit Druck beaufschlagt, wodurch sich eine Deformation und eine Verkleinerung des Querschnitts ergeben. Anschließend wird der derart deformierte Schnappring durch die Aussparung des Anbindungsbereichs geführt. Wenn nunmehr der Druck vom Schnappring weggenommen wird, kann sich der Filterschlauch an den Anbindungsbereich anlegen. Aufgrund der Anordnung und Ausgestaltung der Federelemente an dem Filterkorb kann auf den Schnappring mühelos zugegriffen werden. Zur weiteren Fixierung des Filterschlauchs beziehungsweise des Filterkorbs wird das Venturi-Element mittels eines Plattenabschnitts, welche einen angearbeiteten Bund aufweist, auf der schlauchabgewandten Seite des Anbindungsbereichs der Filterlochplatte positioniert und angebunden.

Zur Demontage des Befestigungssystems ist ebenfalls kein Montagewerkzeug notwendig. Der Filterschlauch wird im Bereich des Schnapprings einseitig nach innen mit Druck beaufschlagt, wodurch sich eine Deformation und eine Verkleinerung des Querschnitts des Filterschlauchs ergibt, und dieser durch die Aussparung des Anbindungsbereichs aus diesem herausgeführt wird. Anschließend werden die Federelemente des Filterkorbs nach innen mit Druck beaufschlagt und durch die Aussparung des Anbindungsbereichs aus diesem herausgeführt. Die Demontage von Filterkorb und Filterschlauch kann auch gleichzeitig erfolgen.

### Fiqurenbeschreibunq

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figur 1 zeigt eine schematische Ansicht eines Filterkorbes eines erfindungsgemäßen Befestigungssystems.
Figur 2 zeigt eine weitere schematische Ansicht eines Filterkorbes eines erfindungsgemäßen Befestigungssystems.
Figur 3 zeigt eine schematische Ansicht eines Filterschlauchs eines erfindungsgemäßen Befestigungssystems.
Figur 4 zeigt eine weitere schematische Ansicht des Filterschlauchs eines erfindungsgemäßen Befestigungssystems.
Figur 5 zeigt eine schematische Seitenansicht einer erfindungsgemäßen Vorrichtung.
Figur 6a zeigt einen ersten Montageschritt der Montage des Befestigungssystems.
Figur 6b zeigt einen zweiten Montageschritt der Montage des Befestigungssystems.
Figur 6c zeigt einen dritten Montageschritt der Montage des Befestigungssystems.
Figur 6d zeigt einen vierten Montageschritt der Montage des Befestigungssystems.
Figur 7a zeigt einen ersten Demontageschritt der Demontage des Befestigungssystems.
Figur 7b zeigt einen zweiten Demontageschritt der Demontage des Befestigungssystems.
Figur 7c zeigt einen dritten Demontageschritt der Demontage des Befestigungssystems.

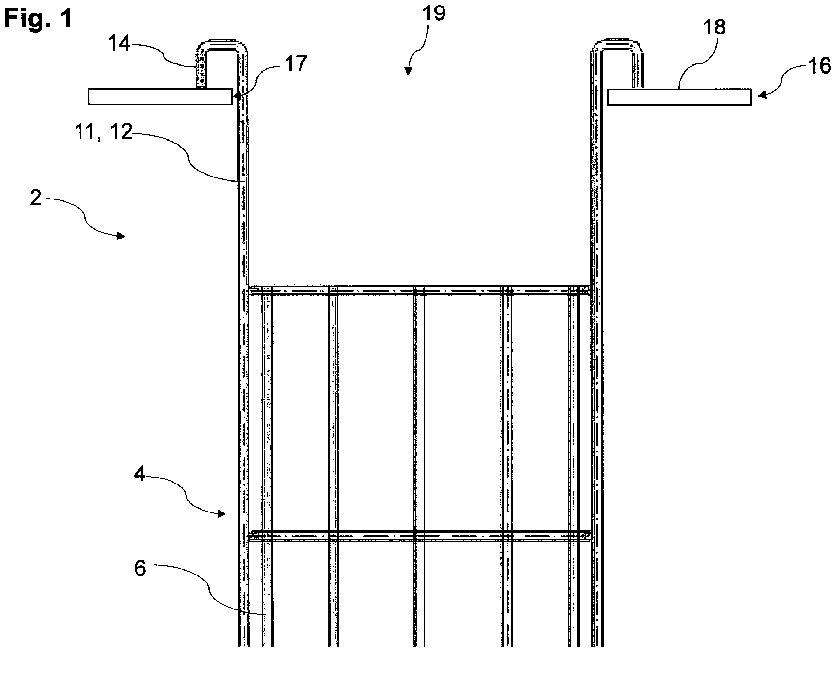

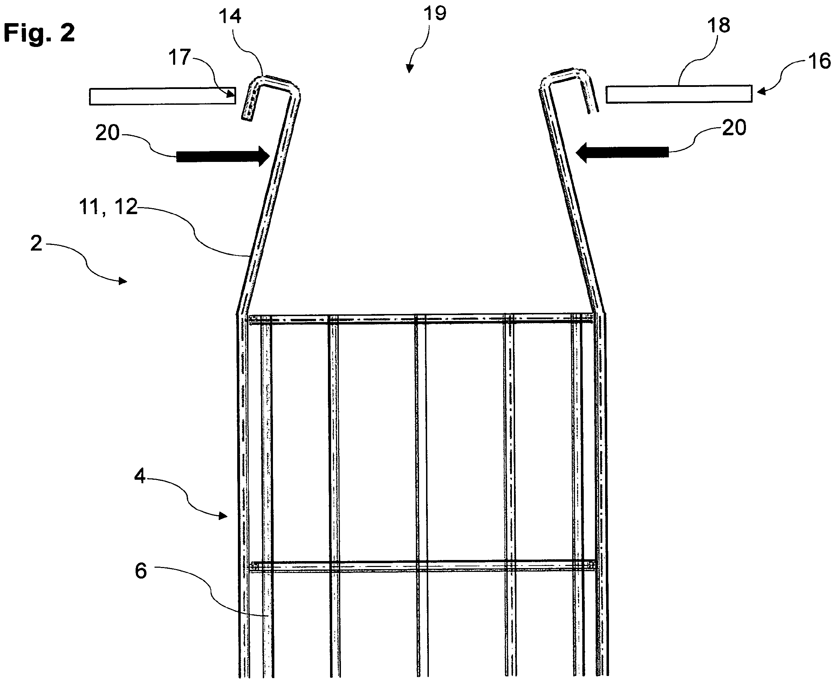

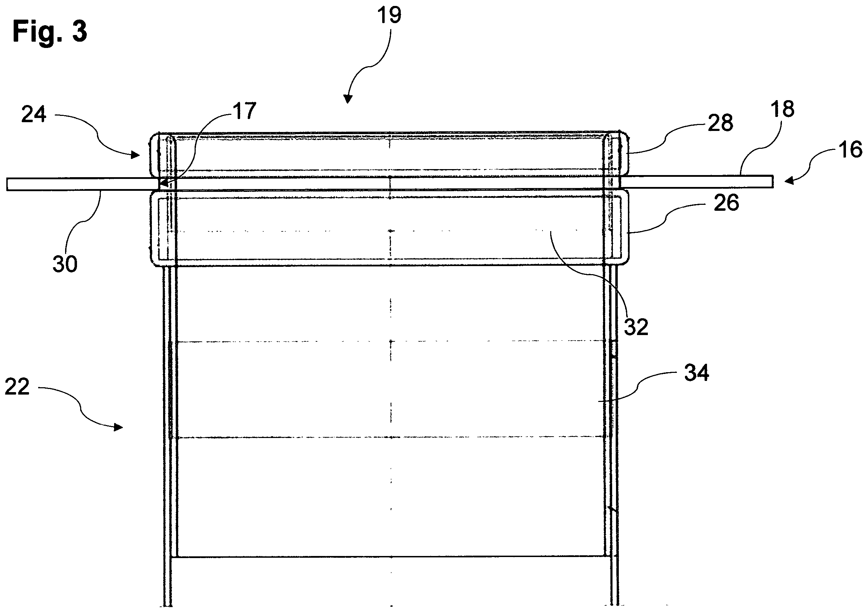

Die Figuren 1 und 2 zeigen jeweils eine schematische Ansicht eines Filterkorbes 2 eines erfindungsgemäßen Befestigungssystems 1. Der Filterkorb 2 besteht idealerweise aus Metall, eine Herstellung aus einem Kunststoffmaterial ist ebenso denkbar. In dem unteren Bereich 4 besteht der Filterkorb 2 beispielsweise aus einem Drahtgeflecht 6. Das Längen- beziehungsweise Breitenausmaß des Drahtgeflechts 6 orientiert sich dabei an den Ausmessungen des Filterschlauchs 22 (nicht dargestellt, vergleiche Figuren 3 bis 5), um diesen ideal zu stabilisieren beziehungsweise zu befestigen. In dem oberen Bereich des Filterkorbes 2 sind zwei bis sechs, idealerweise aber drei, Federelemente 11 in Form von Federklammern 12 an das Drahtgeflecht 6 angebracht, welche elastisch deformierbare Eigenschaften aufweisen. Die Federklammern 12 sind mit zumindest näherungsweise U-förmigen oder gebogenen Klammerenden 14 ausgestattet. Die Federklammern 12 sind derartig ausgebildet, dass diese in einem Anbindungsbereich 17 einer Filterlochplatte 16 angeordnet werden können. Die freien Enden der Klammerenden 14 liegen dabei nach einer Montage des Filterkorbes 2 auf der Oberfläche 18 der Filterlochplatte 16 auf. Der Anbindungsbereich 17 weist eine zumindest annähernd kreisrunde Aussparung 19 auf. Der Filterkorb 2 umfasst ein derartiges Maß, dass die Federklammern 12 derart beabstandet zu dem Rand der Aussparung 19 des Anbindungsbereichs 17 anliegen, dass ausreichend Spielraum zur Anbringung des Filterschlauches 22 an den Anbindungsbereich 17 besteht.

Um den Filterkorb 2 in den Anbindungsbereich 17 zu positionieren, ist eine annähernd in Richtung des Mittelpunkts des Filterkorbs gerichtete Druckkraft, symbolisiert anhand der Pfeile 20 in Figur 2, entgegen der Federklammern 12 notwendig. Die Federklammern 12 werden so weit eingedrückt, dass die Federklammern 12 in die Aussparung 19 des Anbindungsbereichs 17 eingeführt werden können. Sobald die Druckkraft 20 nachlässt, bewegen sich die Federklammern 12 in ihre Ausgangsposition, vergleichbar mit der in Figur 1 dargestellten Situation, zurück.

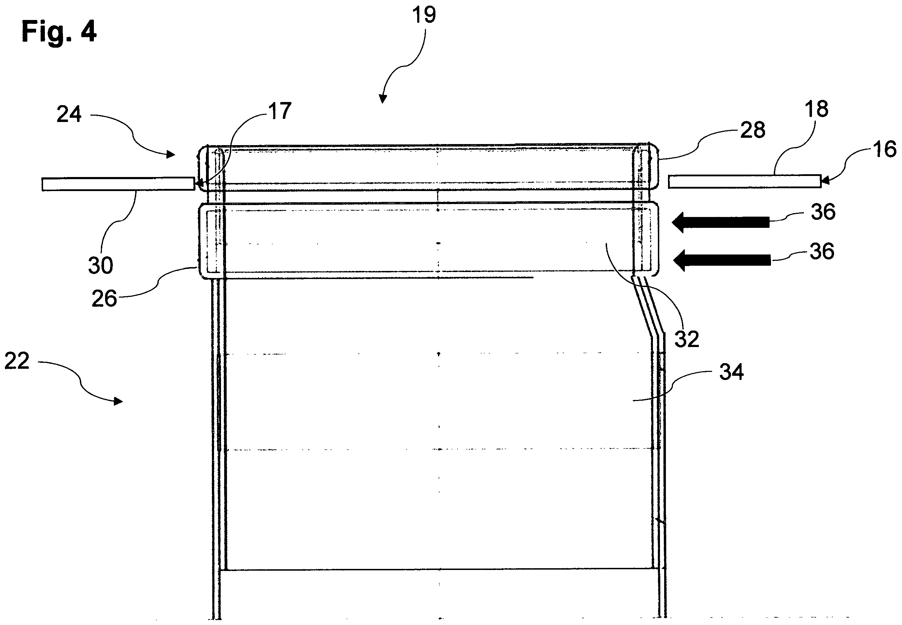

In den Figuren 3 und 4 ist jeweils eine schematische Darstellung eines Filterschlauches 22 eines erfindungsgemäßen Befestigungssystems 1 abgebildet. Der Filterschlauch 22 ist aus einem flexiblen Filtermaterial gefertigt und weist an dem oberen Ende 24 einen, entsprechend zu dem Anbindungsbereich 17 der Filterlochplatte 16, zumindest annähernd kreisrunden Umfang auf, der einen ersten Außendurchmesser umfasst. Am oberen freien Ende 24 des Filterschlauches ist ein Schnappring 32 angeordnet. Der Schnappring 32 kann zur Realisierung der Montage des Filterschlauchs 22 mittels einer Druckbewegung elastisch deformiert werden. Dazu ist ein Kraftaufwand nötig. Der Durchmesser des Schnapprings 32 ist so gewählt, dass sich der Filterschlauch 22 nach der Anbindung an den Anbindungsbereich 17 an die Innenkante der Aussparung 19 anlegen kann.

Weiterhin weist der Filterschlauch 22 im Bereich des oberen Endes 24 einen zweiten erhöhten Außendurchmesser auf. Dieser zweite Außendurchmesser, der zumindest geringfügig größer ist als der erste Außendurchmesser, kann beispielsweise durch Einarbeiten eines Einlegebandes 28 in das Filtermaterial hergestellt werden.

Gemäß dem dargestellten Ausführungsbeispiel sind an dem zur Anbindung an die Filterlochplatte 16 gedachten oberen Ende 24 des Filterschlauches 22 zur Realisierung des zweiten, erhöhten Außendurchmessers zwei Einlegebänder 26 und 28 in das Material des Filterschlauches 22 eingearbeitet. Die Einlegebänder 26, 28 sind so weit voneinander beabstandet, dass die sich gegenüberliegenden Seitenflächen der Einlegebänder 26, 28 an die Oberfläche 18 und Unterseite 30 des Anbindungsbereichs 17 anlegen können. Eine unterschiedlich breite Ausdehnung der Einlegebänder 26 und 28 ist dabei denkbar. Durch das Einlegeband 26 ergibt sich eine bessere Angriffsfläche für eine Montage des Filterschlauches 22.

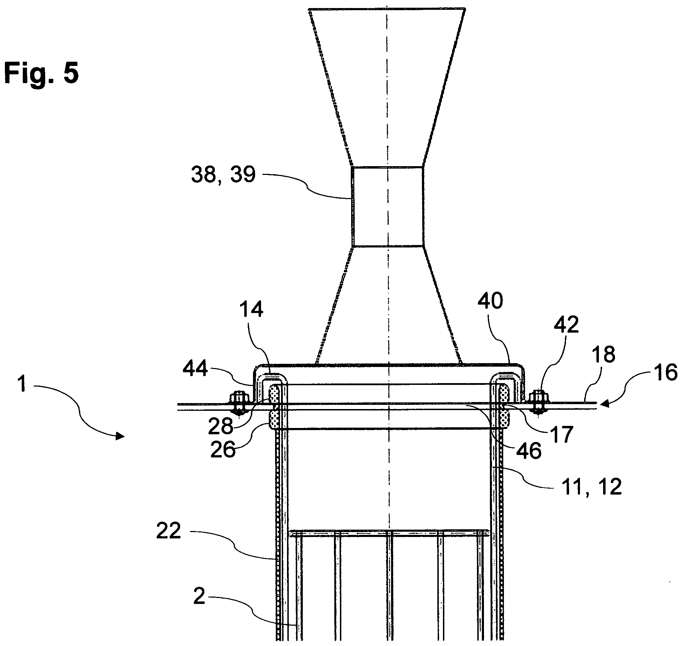

Der am oberen Ende 24 des Filterschlauches 22 eingearbeitete Schnappring 32 wird flächenmäßig zumindest teilweise von den beiden Einlegebändern 26 und 28 überdeckt. Um eine bessere Angriffsfläche für eine Montage des Filterschlauchs 22 zu bieten, kann unterhalb der Einlegebänder 26 und 28 ein weiterer Schnappring 34 angeordnet werden, welcher zudem eine Stabilisierung des Filterschlauches 22 im Bereich der Federklammern 12 (nicht dargestellt, vergleiche Fig. 5) erwirkt.

Um den Filterschlauch 22 an die Filteranlage, welche nicht abgebildet ist, zu montieren, muss das obere Ende 24 des Filterschlauchs 22 deformiert werden, wie in Figur 4 angedeutet ist. Dazu ist lediglich ein geringer Kraftaufwand, symbolisiert durch die Pfeile 36, nötig, um den Schnappring 32 und die Einlegebänder 26, 28 einzudrücken, so dass das obere Ende 24 des Filterschlauchs 22 in den Anbindungsbereich 17 eingeführt werden kann. Sobald die Krafteinwirkung auf den Schnappring 32 nachlässt, formt dieser sich aufgrund seiner Federkraft in seine Ausgangsform zurück. Durch den Umfang des Schnapprings 32 sowie die Anlageflächen der Einlagebänder 26 und 28 an der Aussparung 19 des Anbindungsbereichs 17 entsteht eine staubundurchlässige Dichtfläche 46.

Figur 5 zeigt eine schematische Darstellung eines montierten Filterschlauchs 22 beziehungsweise eines montierten Filterkorbes 2 eines Befestigungssystems 1. Durch die Einlagebänder 26 und 28 des Filterschlauchs 22 entsteht zwischen dem Filterschlauch 22 und der Filterlochplatte 16 eine staubundurchlässige Dichtfläche 46. Die Anbringung des Filterkorbes 2 über die Klammerenden 14 der Federklammern 12 kann der Dichtfläche 46 zwischen dem Filterschlauch 22 und dem Anbindungsbereich 16 zusätzliche Stabilität verleihen.

Für eine ideale Funktion der Filteranlage ist an der Oberfläche 18 des Anbindungsbereichs 17 ein Venturi-Element 38 in Form einer Venturi-Düse 39 angeordnet. Die Venturi-Düse 39 ist mit einem Plattenabschnitt 40, welche einen angearbeiteten Bund 44 aufweist, verbunden. Über den Plattenabschnitt 40 wird die Venturi-Düse 39 an dem Anbindungsbereich 17 mittels einer lösbaren Schraubenverbindung 42 befestigt. Erfindungsgemäß ist allerdings auch eine unlösbare Anbindung der Venturi-Düse 39 denkbar, beispielsweise durch eine Schweißanbindung oder eine einteilige Ausgestaltung der Venturi-Düse 39 und der Filterlochplatte 16 als ein Press- oder Gussteil. Der angearbeitete Bund 44 des Plattenabschnitts 40 ist so ausgestaltet, dass sich der Plattenabschnitt 40 über die Anbindung des Filterschlauches 22 beziehungsweise des Filterkorbs 2 an dem Anbindungsbereich 17 stülpen kann. Diese Ausformung bewirkt eine zusätzliche Sicherung gegen eine vertikale Aushebebewegung des Filterschlauchs 22 beziehungsweise eine Führung des Filterkorbes 2 in radialer Richtung.

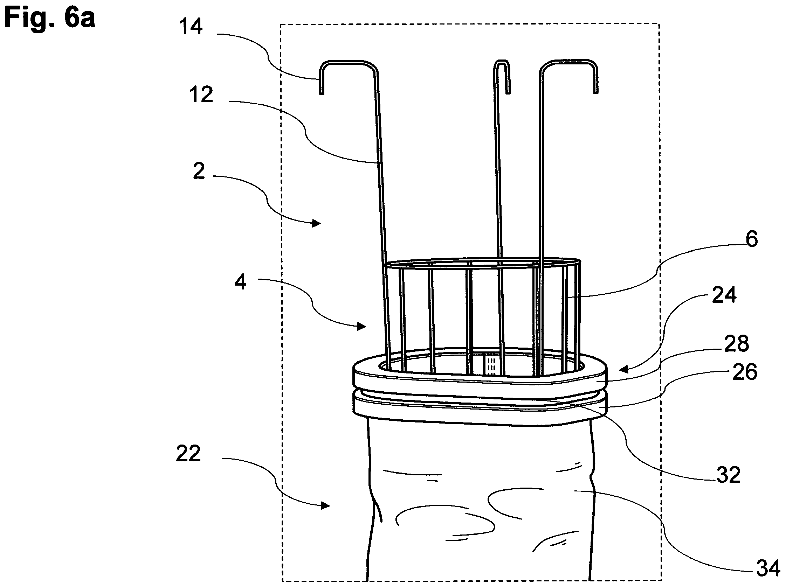

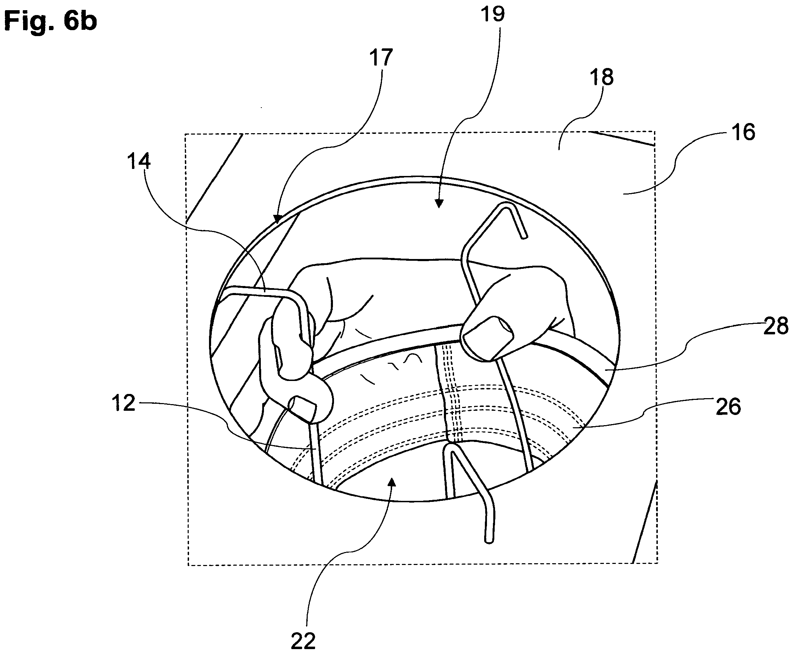

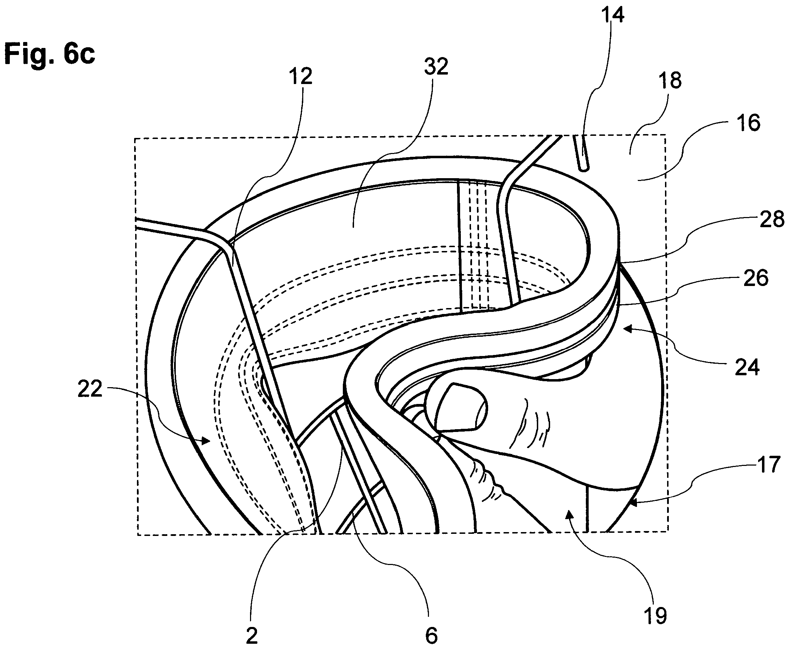

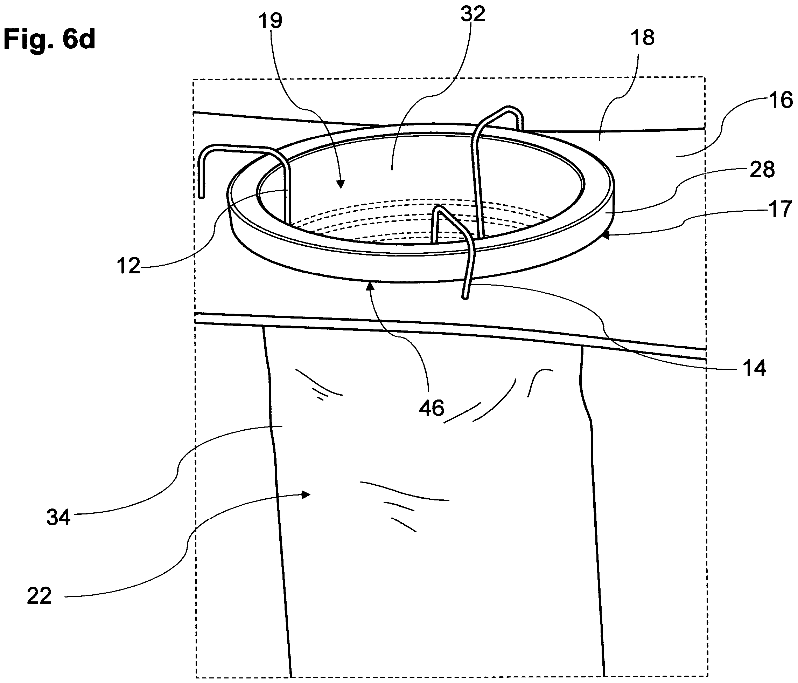

Die Figuren 6a bis 6d beschreiben vier Montageschritte zur Montage des erfindungsgemäßen Befestigungssystems 1. In einem ersten Montageschritt, abgebildet in Figur 6a, wird ein Filterschlauch 22 über einen Filterkorb 2 gezogen. Der Filterschlauch 22 wird in etwa so weit über den Filterkorb 2 gezogen, dass das Drahtgeflecht 6 vom Filterschlauch 22 überdeckt wird. Aufgrund des Schnapprings 32 am oberen Ende 24 des Filterschlauchs 22 in Zusammenspiel mit den Einlagebändern 26 und 28 sowie des zweiten Schnapprings 34 bietet sich eine stabile Angriffsfläche am Filterschlauch 22. Figur 6b zeigt einen zweiten Montageschritt. Hierbei wird eine nach innen gerichtete Druckkraft gegenüber der Federklammern 12 ausgeübt, so dass diese in den Anbindungsbereich 17 eingeführt werden können. Die Federklammern 12 bewegen sich aufgrund ihrer Federkraft nach Wegfall der Druckkraft zurück in ihre Ausgangsposition und liegen mit den Klammerenden 14 auf der Oberfläche 18 der Filterlochplatte 16 auf. Der Filterschlauch 22 befindet sich dabei noch in etwa derselben Position, in welche er während des ersten Montageschrittes gebracht wurde. Die Montage des Filterschlauchs 22 an den Anbindungsbereich 17 erfolgt im dritten Montageschritt, abgebildet in Figur 6c. Dabei wird das obere Ende 24 des Filterschlauchs 22 im Bereich des Schnapprings 32 derartig deformiert, dass dessen Querschnitt kleiner ist als die Fläche des Innenquerschnitts der Aussparung 19 des Anbindungsbereichs 17. Aufgrund der Verteilung der Federklammern 12 an dem Filterkorb 2 kann leicht auf das obere Ende 24 des Filterschlauchs 22 zugegriffen werden. Der Filterschlauch 22 wird so in dem Anbindungsbereich 17 positioniert, dass zumindest ein Bereich mit einem erhöhten Außendurchmesser oberhalb der Filterlochplatte 16 angeordnet ist. Vorzugsweise wird der Filterschlauch 22 so in dem Anbindungsbereich 17 positioniert, dass die Filterlochplatte 16 zwischen den beiden Einlagebändern 26 und 28 des Filterschlauchs 22 anliegt. Somit ist ein Bereich mit erhöhtem Außendurchmesser oberhalb der Filterlochplatte 16 angeordnet und ein weiterer Bereich mit erhöhtem Außendurchmesser ist unterhalb der Filterlochplatte 16 angeordnet. Die Klammerenden 14 der Federklammern 12 umgreifen dabei das obere Einlegeband 28 des Filterschlauchs 22. Figur 6d zeigt ein fertig montiertes Befestigungssystem 1. Die Einlagebänder 26 und 28 sowie der Schnappring 32 am oberen Ende 24 des Filterschlauchs 22 bilden an der Aussparung 19 der Filterlochplatte 16 eine Dichtfläche 46. Zusätzlich kann der Filterkorb 2 mittels der Federklammern 12 sowie deren Klammerenden 14 die Anbindung des Filterschlauchs 22 stabilisieren.

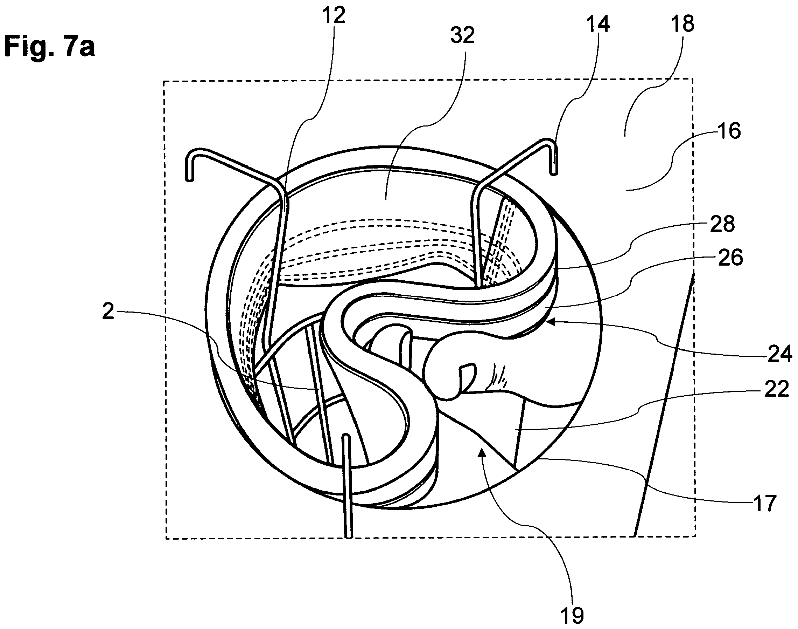

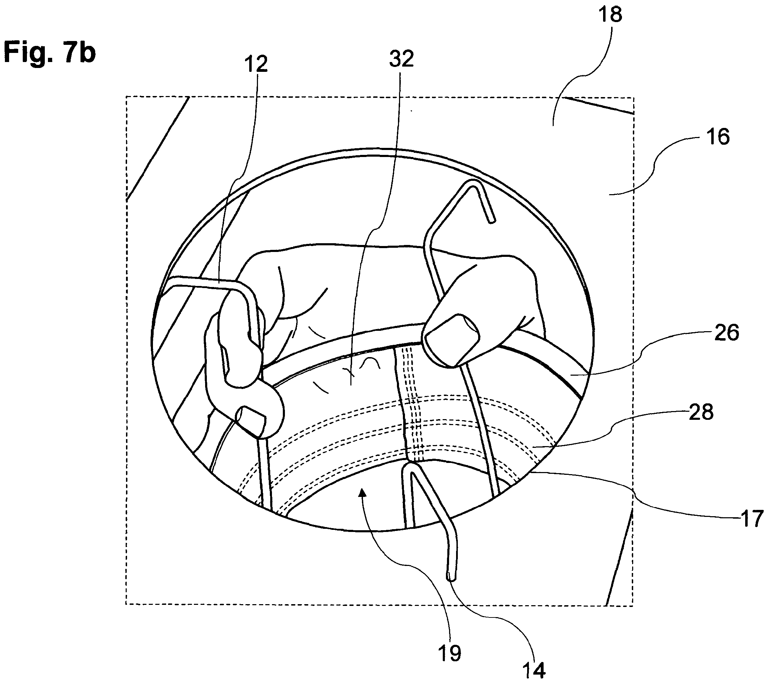

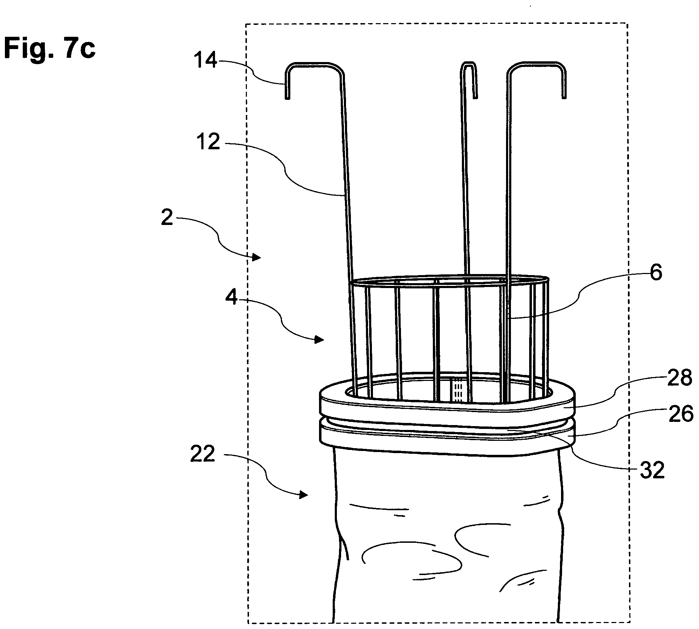

Die Figuren 7a bis 7c beschreiben drei Demontageschritte zur Demontage des Befestigungssystems 1. In Figur 7a ist ein erster Demontageschritt abgebildet. Dabei wird der Filterschlauch 22 im Bereich des Schnapprings 32, wobei in dem Bereich des Schnapprings 32 gemäß vorliegender Ausführungsform zwei Einlegebänder 26 und 28 in den Filterschlauch 22 eingearbeitet sind, derartig deformiert, dass dessen Querschnitt kleiner ist als die Fläche des Innenquerschnitts der Aussparung 19 des Anbindungsbereichs 17. Dadurch kann der Filterschlauch 22 von dem Anbindungsbereich 17 getrennt werden. Aufgrund der Verteilung der Federklammern 12 an dem Filterkorb 2 kann leicht auf das obere Ende 24 des Filterschlauchs 22 zugegriffen werden. Auch die Federklammern 12 des Filterkorbes 2 können dabei bereits leicht deformiert werden. In dem zweiten Demontageschritt, abgebildet in Figur 7b, wird eine nach innen gerichtete Druckkraft gegenüber der Federklammern 12 ausgeübt, sodass diese aus dem Anbindungsbereich 17 herausgeführt werden können. Der Filterkorb befindet sich dabei in etwa auf der Höhe des Drahtgeflechts 6 des Filterkorbes 2. In dem dritten Montageschritt, abgebildet in Figur 7c, ist der Filterkorb 2 bereits losgelöst von der Filterlochplatte 16, und der Filterschlauch 22 kann von dem Filterkorb 2 gezogen werden.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen zeigen lediglich Beispiele, wie die erfindungsgemäße Vorrichtung oder das Verfahren ausgestaltet sein können, und stellen keine abschließende Begrenzung dar.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Befestigungssystem
- 2: Filterkorb
- 4: Unterer Bereich
- 6: Drahtgeflecht
- 11: Federelemente
- 12: Federklammern
- 14: Klammerenden
- 16: Filterlochplatte
- 17: Anbindungsbereich
- 18: Oberfläche
- 19: Aussparung
- 20: Druckkraft
- 22: Filterschlauch
- 24: Oberes Ende
- 26: Einlegeband
- 28: Einlegeband
- 30: Unterseite
- 32: Schnappring
- 34: Schnappring
- 36: Kraftaufwand
- 38: Venturi-Element
- 39: Venturi-Düse
- 40: Plattenabschnitt
- 42: Schraubverbindung
- 44: Bund
- 46: Dichtfläche

Die Erfindung betrifft Befestigungssystem für Filterschläuche und Filterkörbe an Filterlochplatten von Filteranlagen. Dabei umfasst das Befestigungssystem einen Filterschlauch mit einem ersten Außendurchmesser zur Filterung von Staubpartikeln sowie einen Filterkorb zur innenseitigen Stabilisierung und Befestigung des Filterschlauchs. Zudem weist das Befestigungssystem einen an einer Filterlochplatte angeordneten Anbindungsbereich zur Anbindung des Filterschlauchs und/oder des Filterkorbs an eine Filteranlage auf. Dabei umfasst der Anbindungsbereich eine Aussparung für den Filterschlauch. Der Filterschlauch weist zur Anbindung an den Anbindungsbereich an einem Ende wenigstens einen Schnappring, sowie einen zweiten Außendurchmesser im Bereich des Schnapprings auf. Weiterhin weist der Filterschlauch im Bereich des Schnapprings einen zweiten Außendurchmesser auf, der zumindest geringfügig größer ist als der erste Außendurchmesser des Filterschlauchs. Der Filterkorb ist aus einem korbähnlichen Gebilde ausgestaltet und weist an seinem oberen Ende wenigstens zwei Federelemente zur Anbindung an den Anbindungsbereich auf. Der Schnappring ist dabei elastisch deformierbar und in mindestens eine erste Form bringbar, deren Querschnittsfläche kleiner ist als eine Fläche des Innenquerschnitts der Aussparung der Filterlochplatte. Des Weiteren betrifft die vorliegende Erfindung ein Verfahren zur Befestigung von Filterschläuchen und Filterkörben an Filterlochplatten von Filteranlagen durch den Filterrohgasbereich.

## Patentansprüche

1. Befestigungssystem (1) umfassend
- einen Filterschlauch (22) mit einem ersten Außendurchmesser zur Filterung von Staubpartikeln;
- einen Filterkorb (2) zur innenseitigen Stabilisierung und Befestigung des Filterschlauchs (22); und
- einen an einer Filterlochplatte (16) angeordneten Anbindungsbereich (17) zur Anbindung des Filterschlauchs (22) und/oder des Filterkorbs (2) an eine Filteranlage;
- wobei der Anbindungsbereich (17) eine Aussparung (19) für den Filterschlauch (22) umfasst;
- wobei der Filterschlauch (22) zur Anbindung an den Anbindungsbereich (17) an einem Ende wenigstens einen Schnappring (32) aufweist;
- wobei der Filterschlauch (22) zur Anbindung an den Anbindungsbereich (17) weiterhin zwei voneinander beabstandete Einlagebänder (26,28) aufweist, welche den wenigstens einen Schnappring (32) zumindest teilweise flächenmäßig an einer Seitenkante überdecken;
- wobei der Filterschlauch (22) im Bereich der Einlegebänder (26, 28) einen zweiten Außendurchmesser aufweist, der zumindest geringfügig größer ist als der erste Außendurchmesser des Filterschlauchs (22);
- wobei der Filterkorb (2) aus einem korbähnlichen Gebilde ausgestaltet ist, welcher an seinem oberen Ende wenigstens zwei Federelemente (11) zur Anbindung an den Anbindungsbereich (17) aufweist;
- wobei der Schnappring (32) elastisch deformierbar ist und in mindestens eine erste Form bringbar ist, deren Querschnittsfläche kleiner ist als eine Fläche des Innenquerschnitts der Aussparung (19) der Filterlochplatte (16);
- wobei unterhalb der Einlegebänder (26, 28) an dem Filterschlauch (22) wenigstens ein weiterer Schnappring (34) zur Stabilisierung des Filterschlauchs (22) im Bereich der Federelemente (11) angebracht ist.

2. Befestigungssystem (1) nach Anspruch 1, wobei der Filterschlauch (22) so an den Anbindungsbereich (17) angebunden ist, dass die zwei Einlagebänder (26,28) jeweils an der Oberfläche (18) und Unterseite (30) der Filterlochplatte (16) anliegen.

3. Befestigungssystem (1) nach einem der Ansprüche 1 oder 2, wobei die zwei Einlagebänder (26,28) derartig an dem Anbindungsbereich (17) anliegen, sodass der Filterschlauch (22) keine Vertikalbewegung ausführen kann.

4. Befestigungssystem (1) nach einem der Ansprüche 1 bis 3, wobei die Federelemente (11) Federklammern (12) sind und wobei der Filterkorb (2) an seinem oberen Ende zwei bis sechs, insbesondere drei, Federklammern (12) aufweist.

5. Befestigungssystem (1) nach einem der Ansprüche 1 bis 4, wobei ein Venturi-Element (38) so an dem Anbindungsbereich (17) angebracht ist, dass eine Sicherung und/oder Zentrierung des Filterkorbs (2) erfolgt.

6. Befestigungssystem (1) nach Anspruch 5, wobei das Venturi-Element (38) über einen an einem Plattenabschnitt (40) angearbeiteten Bund (44) an dem Anbindungsbereich (17) befestigt ist.

7. Befestigungssystem (1) nach einem der Ansprüche 1 bis 6, wobei zur Montage und/oder Demontage des Filterschlauchs (22) und/oder des Filterkorbs (2) eine annähernd in Richtung des Mittelpunkts des Schnapprings (32) und/oder der Federelemente (11) gerichtete Druckbewegung entgegen des Schnapprings (32) und/oder der Federelemente (11) erfolgt.

8. Verfahren zur Montage eines Befestigungssystems (1) gemäß einem der Ansprüche 1 bis 7,
- wobei die Federelemente (11) des Filterkorbs (2) nach innen mit Druck beaufschlagt werden und durch die Aussparung (19) des Anbindungsbereichs (17) geführt und in den Anbindungsbereich (17) eingehängt werden;
- wobei der Filterschlauch (22) im Bereich des Schnapprings (32) nach innen mit Druck beaufschlagt wird und durch die Aussparung (19) des Anbindungsbereichs (17) geführt wird;
- wobei anschließend der Druck vom Schnappring (32) weggenommen wird, so dass sich der Filterschlauch (22) an den Anbindungsbereich (17) anlegt.

9. Verfahren zur Demontage eines Befestigungssystems (1) gemäß einem der Ansprüche 1 bis 7,
- wobei der Filterschlauch (22) im Bereich des Schnapprings (32) nach innen mit Druck beaufschlagt wird und durch die Aussparung (19) des Anbindungsbereichs (17) aus diesem herausgeführt wird; und
- wobei die Federelemente (11) des Filterkorbs (2) nach innen mit Druck beaufschlagt und durch die Aussparung (19) des Anbindungsbereichs (17) aus diesem herausgeführt werden.

## Claims

1. A fastening system (1) comprising
- a filter hose (22) with a first outer diameter for filtering dust particles;
- a filter basket (2) for internally stabilising and fastening the filter hose (22); and
- an attachment region (17) arranged on a perforated filter plate (16) for attaching the filter hose (22) and/or the filter basket (2) to a filter installation;
- wherein the attachment region (17) comprises a cutout (19) for the filter hose (22);
- wherein the filter hose (22) has, at one end, at least one snap-ring (32) for the attachment to the attachment region (17);
- wherein the filter hose (22), for the attachment to the attachment region (17), also has two insert strips (26, 28) spaced apart from one another, which cover the at least one snap-ring (32) at least over part of the area at a side edge;
- wherein the filter hose (22) has, in the region of the insert strips (26, 28), a second outer diameter which is slightly larger than the first outer diameter of the filter hose (22);
- wherein the filter basket (2) is made of a basket-like formed body, which has, at its upper end, at least two spring elements (11) for the attachment to the attachment region (17);
- wherein the snap-ring (32) is elastically deformable and can be brought into at least one first shape, the cross-sectional area of which is smaller than an area of the inner cross-section of the cutout (19) of the perforated filter plate (16);
- wherein at least one further snap-ring (34) is fitted beneath the insert strips (26, 28) on the filter hose (22) for the stabilisation of the filter hose (22) in the region of the spring elements (11).

2. The fastening system (1) according to claim 1, wherein the filter hose (22) is attached to the attachment region (17) in such a way that the two insert strips (26, 28) lie respectively against the surface (18) and underside (30) of the perforated filter plate (16).

3. The fastening system (1) according to any one of claims 1 or 2, wherein the two insert strips (26, 28) lie against the attachment region (17) in such a way that the filter hose (22) cannot perform any vertical movement.

4. The fastening system (1) according to any one of claims 1 to 3, wherein the spring elements (11) are spring clips (12) and wherein the filter basket (2) has, at its upper end, two to six, in particular three, spring clips (12).

5. The fastening system (1) according to any one of claims 1 to 4, wherein a venturi element (38) is fitted to the attachment region (17) in such a way that securing and/or centring of the filter basket (2) takes place.

6. The fastening system (1) according to claim 5, wherein the venturi element (38) is fastened to the attachment region (17) via a collar (44) worked onto a plate section (40).

7. The fastening system (1) according to any one of claims 1 to 6, wherein, for the assembly and/or dismantling of the filter hose (22) and/or of the filter basket (2), a pressure movement directed approximately in the direction of the centre-point of the snap-ring (32) and/or of the spring elements (11) takes place against the snap-ring (32) and/or the spring elements (11).

8. A method for the assembly of a fastening system (1) according to any one of claims 1 to 7,
- wherein the spring elements (11) of the filter basket (2) are subjected to an inward pressure and guided through the cutout (19) of the attachment region (17) and hooked into the attachment region (17);
- wherein the filter hose (22) is subjected to an inward pressure in the region of the snap-ring (32) and guided through the cutout (19) of the attachment region (17);
- wherein the pressure is then removed from the snap-ring (32), so that the filter hose (22) lies against the attachment region (17).

9. A method for dismantling a fastening system (1) according to any one of claims 1 to 7,
- wherein the filter hose (22) is subjected to an inward pressure in the region of the snap-ring (32) and is guided through the cutout (19) of the attachment region (17) out of the latter; and
- wherein the spring elements (11) of the filter basket (2) are subjected to an inward pressure and guided through the cutout (19) of the attachment region (17) out of the latter.

## Revendications

1. Système de fixation (1) comprenant
- une manche filtrante (22) ayant un premier diamètre extérieur, destinée à filtrer des particules de poussière ;
- un panier filtrant (2), destiné à stabiliser la face intérieure de la manche filtrante (22) et à fixer celle-ci ; et
- une zone de liaison (17), placée sur une plaque filtrante perforée (16), destinée à relier la manche filtrante (22) et/ou le panier filtrant (2) sur une installation de filtration ;
- la zone de liaison (17) comprenant une encoche (19) pour la manche filtrante (22) ;
- pour être reliée sur la zone de liaison (17), la manche filtrante (22) comportant sur une extrémité au moins un clip de serrage (32) ;
- pour être reliée sur la zone de liaison (17), la manche filtrante (22) comportant par ailleurs deux bandes d'insertion (26,28) écartées l'une de l'autre, lesquelles recouvrent au moins partiellement en surface l'au moins un clip de serrage (32) sur une arête latérale ;
- dans la zone des bandes d'insertion (26, 28), la manche filtrante (22) ayant un deuxième diamètre extérieur qui est au moins légèrement supérieur au premier diamètre extérieur de la manche filtrante (22) ;
- le panier filtrant (2) étant conçu à partir d'une structure semblable à un panier, laquelle comporte sur son extrémité supérieure au moins deux éléments à ressort (11), destinés à être reliés sur la zone de liaison (17) ;
- le clip de serrage (32) étant élastiquement déformable et susceptible d'être amené dans au moins une première forme dont la surface de section transversale est inférieure à une surface de la section transversale intérieure de l'encoche (19) de la plaque filtrante perforée (16) ;
- en-dessous des bandes d'insertion (26, 28) sur la manche filtrante (22) étant monté au moins un clip de serrage (34) supplémentaire, destiné à stabiliser la manche filtrante (22) dans la zone des éléments à ressort (11).

2. Système de fixation (1) selon la revendication 1, la manche filtrante (22) étant reliée sur la zone de liaison (17) de telle sorte que les deux bandes d'insertion (26,28) soient respectivement adjacentes à la surface (18) et à la face inférieure (30) de la plaque filtrante perforée (16).

3. Système de fixation (1) selon l'une quelconque des revendications 1 ou 2, les deux bandes d'insertion (26,28) étant adjacentes à la zone de liaison (17) de telle sorte que la manche filtrante (22) ne soit pas apte à effectuer un déplacement vertical.

4. Système de fixation (1) selon l'une quelconque des revendications 1 à 3, les éléments à ressort (11) étant des pinces élastiques (12) et sur son extrémité supérieure, le panier filtrant (2) comportant de deux à six, notamment trois pinces élastiques (12).

5. Système de fixation (1) selon l'une quelconque des revendications 1 à 4, un élément venturi (38) étant monté sur la zone de liaison (17) de sorte à donner lieu à un blocage et/ou à un centrage du panier filtrant (2).

6. Système de fixation (1) selon la revendication 5, l'élément venturi (38) étant fixé sur la zone de liaison (17) par l'intermédiaire d'un collet (44) usiné sur un segment de plaque (40).

7. Système de fixation (1) selon l'une quelconque des revendications 1 à 6, pour le montage et/ou le démontage de la manche filtrante (22) et/ou du panier filtrant (2) s'effectuant un mouvement de pression orienté approximativement dans la direction du point médian du clip de serrage (32) et/ou des éléments à ressort (11), à l'encontre du clip de serrage (32) et/ou des éléments à ressort (11).

8. Procédé, destiné à monter un système de fixation (1) selon l'une quelconque des revendications 1 à 7,
- les éléments à ressort (11) du panier filtrant (2) étant soumis vers l'intérieur à une pression et guidés à travers l'encoche (19) de la zone de liaison (17) et accrochés dans la zone de liaison (17) ;
- dans la zone du clip de serrage (32), la manche filtrante (22) étant soumise vers l'intérieur à une pression et guidée à travers l'encoche (19) de la zone de liaison (17) ;
- par la suite, la pression étant retirée du clip de serrage (32), de sorte que la manche filtrante (22) soit adjacente à la zone de liaison (17).

9. Procédé, destiné à démonter un système de fixation (1) selon l'une quelconque des revendications 1 à 7,
- dans la zone du clip de serrage (32), la manche filtrante (22) étant soumise vers l'intérieur à une pression et à travers l'encoche (19) de la zone de liaison (17), étant guidée hors de celle-ci ; et
- les éléments à ressort (11) du panier filtrant (2) étant soumis vers l'intérieur à une pression et à travers l'encoche (19) de la zone de liaison (17), étant guidés hors de celle-ci.
